# EUROPEAN PATENT APPLICATION

(11) **EP 3 581 593 A1**
(43) Date of publication of application: **18.12.2019**
(21) Application number: 18751241.3
(22) Date of filing: 31.01.2018
(51) Int. Cl.: C08F 20/10, C08K 5/17, C08L 33/00

(54) **ACRYLIC RUBBER**

(30) Priority: 09.02.2017 JP 2017022003
(71) Applicant: Zeon Corporation, Tokyo 100-8246 (JP)
(72) Inventor: KOJIMA, Keisuke, Tokyo 100-8246 (JP); EJIRI, Kazuhiro, Tokyo 100-8246 (JP); MASUDA, Hirofumi, Tokyo 100-8246 (JP)
(74) Representative: Maiwald Patent- und Rechtsanwaltsgesellschaft mbH
(86) International application number: PCT/JP2018/003208
(87) International publication number: WO 2018/147142

(57) **Abstract**

The present invention provides an acrylic rubber having a residual calcium content of 60 wt ppm or less and a polymer pH of 7.0 or less, and preferably having a carboxyl group.

## Description

### TECHNICAL FIELD

The present invention relates to an acrylic rubber, and more specifically relates to an acrylic rubber which can provide a cross-linked rubber having excellent original state physical properties and having high compression set resistance, and can effectively prevent air bubbles generated when the acrylic rubber is cross-linked by steam cross-linking.

### BACKGOUND ART

Acrylic rubber, which is a group of polymers comprising an acrylic acid ester as a main ingredient, is generally known as a type of rubber having high heat resistance, oil resistance, and ozone resistance, and is widely used in automobile-related fields.

For example, Patent Document 1 discloses an acrylic rubber composition comprising 4 to 30 parts by weight of calcium oxide relative to 100 parts by weight of a carboxyl group-containing acrylic rubber. Patent Document 1 provides an acrylic rubber composition which has high scorching stability to prevent a reduction in physical properties during steam vulcanization. Unfortunately, although the acrylic rubber composition according to Patent Document 1 can provide a cross-linked rubber having compression set resistance improved to a certain level, the compression set resistance is not always sufficiently improved, leading to a demand for a further improved compression set resistance according to the applications in which the acrylic rubber is used.

### PRIOR ART DOCUMENT

### PATENT DOCUMENTS

Patent Document 1: JP-A 2006-233075

### SUMMARY OF THE INVENTION

### PROBLEMS TO BE SOLVED BY INVENTION

The present invention has been made in consideration of such circumstances. An object of the present invention is to provide an acrylic rubber which can provide a cross-linked rubber having excellent original state physical properties and having high compression set resistance, and can effectively prevent air bubbles generated when the acrylic rubber is cross-linked by steam cross-linking.

Another object of the present invention is to provide an acrylic rubber composition and a cross-linked rubber prepared using such an acrylic rubber.

### MEANS FOR SOLVING PROBLEMS

The present inventors, who have conducted extensive research to solve the problems, have found that the object above can be achieved by reducing the residual calcium content in an acrylic rubber to 60 wt ppm or less and controlling a polymer pH of the acrylic rubber to 7.0 or less, and have completed the present invention.

In other words, the present invention provides an acrylic rubber having a residual calcium content of 60 wt ppm or less and a polymer pH of 7.0 or less.

The acrylic rubber according to the present invention preferably has a carboxyl group.

The acrylic rubber according to the present invention preferably includes an α,β-ethylenically unsaturated carboxylic acid monomer unit.

In the acrylic rubber according to the present invention, the content of the α,β-ethylenically unsaturated carboxylic acid monomer unit is preferably 0.1 to 10 wt% of the total monomer units.

In the acrylic rubber according to the present invention, the content of a (meth)acrylic acid ester monomer unit is preferably 50 to 99.9 wt% of the total monomer units.

The present invention also provides an acrylic rubber composition comprising the acrylic rubber and a cross-linking agent.

In the acrylic rubber composition according to the present invention, the cross-linking agent is preferably a polyvalent amine compound or a carbonate thereof.

The acrylic rubber composition according to the present invention further comprises a cross-linking accelerator. The cross-linking accelerator is preferably a diazabicycloalkene compound or an aliphatic monovalent primary amine compound.

The acrylic rubber composition according to the present invention preferably has a Mooney scorch time t35 of 15 minutes or more, which is measured at a temperature of 125°C according to JIS K6300.

Furthermore, the present invention provides a cross-linked rubber prepared through cross-linking of the acrylic rubber composition.

### EFFECTS OF THE INVENTION

The present invention can provide an acrylic rubber which can provide a cross-linked rubber having excellent original state physical properties and having high compression set resistance, and can effectively prevent air bubbles generated when the acrylic rubber is cross-linked by steam cross-linking, and an acrylic rubber composition and a cross-linked rubber prepared using such an acrylic rubber.

### DESCRIPTION OF EMBODIMENTS

### <Acrylic rubber>

The acrylic rubber according to the present invention refers to a rubbery polymer comprising a (meth)acrylic acid ester monomer unit as a main ingredient (which refers to an ingredient occupying 50 wt% or more of the total rubber monomer units in the present invention) in the molecule, and having a residual calcium content of 60 wt ppm or less and a polymer pH of 7.0 or less (where the term (meth)acrylic acid ester monomer means an acrylic acid ester monomer and/or a methacrylic acid ester monomer. Hereinafter, the same holds for methyl (meth)acrylate, and others).

Examples of the (meth)acrylic acid ester monomer forming the (meth)acrylic acid ester monomer unit as the main ingredient of the acrylic rubber according to the present invention include, but should not be limited to, alkyl (meth)acrylate monomers, alkoxyalkyl (meth)acrylate monomers, and the like.

Any alkyl (meth)acrylate monomer can be used without limitation, and (meth)acrylic acid esters of C₁ to C₈ alkanols are preferred. Specifically, examples thereof include methyl (meth)acrylate, ethyl (meth)acrylate, n-propyl (meth)acrylate, isopropyl (meth)acrylate, n-butyl (meth)acrylate, isobutyl (meth)acrylate, n-hexyl (meth)acrylate, 2-ethylhexyl (meth)acrylate, cyclohexyl (meth)acrylate, and the like. Among these monomers, ethyl (meth)acrylate and n-butyl (meth)acrylate are preferred, and ethyl acrylate and n-butyl acrylate are particularly preferred. These monomers can be used alone or in combination.

Any alkoxyalkyl (meth)acrylate monomer can be used without limitation, and (meth)acrylic acid esters of C₂ to C₈ alkoxyalkyl alcohols are preferred. Specifically, examples thereof include methoxymethyl (meth)acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, 4-methoxybutyl (meth)acrylate, and the like. Among these monomers, 2-ethoxyethyl (meth)acrylate and 2-methoxyethyl (meth)acrylate are preferred, and 2-ethoxyethyl acrylate and 2-methoxyethyl acrylate are particularly preferred. These monomers can be used alone or in combination.

The content of the (meth)acrylic acid ester monomer unit in the acrylic rubber according to the present invention is usually 50 to 99.9 wt%, preferably 60 to 99.5 wt%, more preferably 70 to 99.5 wt%, still more preferably 90 to 99.5 wt%, further still more preferably 93 to 99.5 wt%, particularly preferably 95 to 99.5 wt%. An excessively small content of the (meth)acrylic acid ester monomer unit may result in a cross-linked rubber having reduced weatherability, heat resistance, and oil resistance. In contrast, an excessively large content thereof may result in a cross-linked rubber having reduced heat resistance.

The (meth)acrylic acid ester monomer unit of the acrylic rubber according to the present invention is preferably composed of 30 to 100 wt% of the alkyl (meth)acrylate monomer unit and 70 to 0 wt% of the alkoxyalkyl (meth)acrylate monomer unit.

In addition to the (meth)acrylic acid ester monomer unit, the acrylic rubber according to the present invention may include a cross-linkable monomer unit as needed. Any cross-linkable monomer for forming a cross-linkable monomer unit can be used without limitation. Examples thereof include α,β-ethylenically unsaturated carboxylic acid monomers; monomers having an epoxy group; monomers having halogen atoms; diene monomers; and the like. Among these monomers, preferred cross-linkable monomers to be used are α,β-ethylenically unsaturated carboxylic acid monomers. If an α,β-ethylenically unsaturated carboxylic acid monomer is used, the acrylic rubber can be obtained as a carboxyl group-containing acrylic rubber having a carboxyl group as a cross-linking point, which, in turn, results in a cross-linked rubber having further enhanced compression set resistance.

Any α,β-ethylenically unsaturated carboxylic acid monomer for forming an α,β-ethylenically unsaturated carboxylic acid monomer unit can be used without limitation. Examples thereof include C₃ to C₁₂ α,β-ethylenically unsaturated monocarboxylic acids, C₄ to C₁₂ α,β-ethylenically unsaturated dicarboxylic acids, C₄ to C₁₂ α,β-ethylenically unsaturated dicarboxylic acid monoesters of C₁ to C₈ alkanols, and the like.

Specific examples of the C₃ to C₁₂ α,β-ethylenically unsaturated monocarboxylic acids include acrylic acid, methacrylic acid, α-ethylacrylic acid, crotonic acid, cinnamic acid, and the like.

Specific examples of the C₄ to C₁₂ α,β-ethylenically unsaturated dicarboxylic acids include butenedioic acids such as fumaric acid and maleic acid; itaconic acid; citraconic acid; and chloromaleic acid; and the like.

Specific examples of the C₄ to C₁₂ α,β-ethylenically unsaturated dicarboxylic acid monoesters of C₁ to C₈ alkanols include linear mono-alkyl esters of butenedioic acid such as monomethyl fumarate, monoethyl fumarate, mono-n-butyl fumarate, monomethyl maleate, monoethyl maleate, and mono-n-butyl maleate; butenedioic acid monoesters having an alicyclic structure such as monocyclopentyl fumarate, monocyclohexyl fumarate, monocyclohexenyl fumarate, monocyclopentyl maleate, monocyclohexyl maleate, and monocyclohexenyl maleate; itaconic acid monoesters such as monomethyl itaconate, monoethyl itaconate, mono-n-butyl itaconate, and monocyclohexyl itaconate; and the like.

Among these monoesters, preferred are linear mono-alkyl esters of butenedioic acids or butenedioic acid monoesters having an alicyclic structure. More preferred are mono-n-butyl fumarate, mono-n-butyl maleate, monocyclohexyl fumarate, and monocyclohexyl maleate. Still more preferred is mono-n-butyl fumarate. These α,β-ethylenically unsaturated carboxylic acid monomers can be used alone or in combination. Among these monomers listed above, the dicarboxylic acids include those present as anhydrides thereof.

Any monomer having an epoxy group can be used without limitation. Examples thereof include epoxy group-containing (meth)acrylic acid esters such as glycidyl (meth)acrylate; epoxy group-containing ethers such as allyl glycidyl ether and vinyl glycidyl ether; and the like.

Any monomer having halogen atoms can be used without limitation. Examples thereof include unsaturated alcohol esters of halogen-containing saturated carboxylic acids, haloalkyl (meth)acrylates, haloacyloxyalkyl (meth)acrylates, (haloacetylcarbamoyloxy)alkyl (meth)acrylates, halogen-containing unsaturated ethers, halogen-containing unsaturated ketones, halomethyl group-containing aromatic vinyl compounds, halogen-containing unsaturated amides, haloacetyl group-containing unsaturated monomers, and the like.

Specific examples of the unsaturated alcohol esters of halogen-containing saturated carboxylic acids include vinyl chloroacetate, vinyl 2-chloropropionate, allyl chloroacetate, and the like.

Specific examples of the haloalkyl (meth)acrylates include chloromethyl (meth)acrylate, 1-chloroethyl (meth)acrylate, 2-chloroethyl (meth)acrylate, 1,2-dichloroethyl(meth)acrylate, 2-chloropropyl (meth)acrylate, 3-chloropropyl (meth)acrylate, 2,3-dichloropropyl (meth)acrylate, and the like.

Specific examples of the haloacyloxyalkyl (meth)acrylates include 2-(chloroacetoxy)ethyl (meth)acrylate, 2-(chloroacetoxy)propyl (meth)acrylate, 3-(chloroacetoxy)propyl (meth)acrylate, 3-(hydroxychloroacetoxy)propyl (meth)acrylate, and the like.

Specific examples of the (haloacetylcarbamoyloxy)alkyl (meth)acrylates include 2-(chloroacetylcarbamoyloxy)ethyl (meth)acrylate, 3-(chloroacetylcarbamoyloxy)propyl (meth)acrylate, and the like.

Specific examples of the halogen-containing unsaturated ethers include chloromethylvinyl ether, 2-chloroethylvinyl ether, 3-chloropropylvinyl ether, 2-chloroethylallyl ether, 3-chloropropylallyl ether, and the like.

Specific examples of the halogen-containing unsaturated ketones include 2-chloroethylvinyl ketone, 3-chloropropylvinyl ketone, 2-chloroethylallyl ketone, and the like.

Specific examples of the halomethyl group-containing aromatic vinyl compounds include p-chloromethylstyrene, m-chloromethylstyrene, o-chloromethylstyrene, p-chloromethyl-α-methylstyrene, and the like.

Specific examples of the halogen-containing unsaturated amides include N-chloromethyl(meth)acrylamide and the like.

Specific examples of the haloacetyl group-containing unsaturated monomers include 3-(hydroxychloroacetoxy)propyl allyl ether, p-vinylbenzyl chloroacetate, and the like.

Examples of the diene monomers include conjugated diene monomers and non-conjugated diene monomers.

Specific examples of the conjugated diene monomers include 1,3-butadiene, isoprene, piperylene, and the like.

Specific examples of the non-conjugated diene monomers include ethylidene norbornene, dicyclopentadiene, dicyclopentadienyl (meth)acrylate, 2-dicyclopentadienylethyl (meth)acrylate, and the like.

The content of the cross-linkable monomer unit in the acrylic rubber according to the present invention is preferably 0.1 to 10 wt%, more preferably 0.5 to 7 wt%, still more preferably 0.5 to 5 wt%. A content of the cross-linkable monomer unit controlled within such a range can result in a cross-linked rubber having high heat resistance and more appropriately enhanced compression set resistance.

Besides the (meth)acrylic acid ester monomer unit and the cross-linkable monomer unit used as needed, the acrylic rubber according to the present invention may also include a unit of an additional monomer copolymerizable with these monomers. Examples of such an additional copolymerizable monomer include aromatic vinyl monomers, α,β-ethylenically unsaturated nitrile monomers, acrylamide monomers, other olefin monomers, and the like.

Examples of the aromatic vinyl monomers include styrene, α-methylstyrene, divinylbenzene, and the like.

Examples of the α,β-ethylenically unsaturated nitrile monomers include acrylonitrile, methacrylonitrile, and the like.

Examples of the acrylamide monomers include acrylamide, methacrylamide, and the like.

Examples of the other olefin monomers include ethylene, propylene, vinyl chloride, vinylidene chloride, vinyl acetate, ethyl vinyl ether, butyl vinyl ether, and the like.

Among these additional copolymerizable monomers, preferred are styrene, acrylonitrile, methacrylonitrile, ethylene, and vinyl acetate. More preferred are acrylonitrile, methacrylonitrile, and ethylene.

These additional copolymerizable monomers can be used alone or in combination. The content of the unit of the additional copolymerizable monomer in the acrylic rubber according to the present invention is usually 49.9 wt% or less, preferably 39.5 wt% or less, more preferably 29.5 wt% or less.

The acrylic rubber according to the present invention has a residual calcium content controlled to 60 wt ppm or less and a polymer pH controlled to 7.0 or less. According to the present invention, the residual calcium content in the acrylic rubber is controlled to 60 wt ppm or less and the polymer pH of the acrylic rubber is controlled to 7.0 or less. If such an acrylic rubber is compounded with a cross-linking agent and is cross-linked into a cross-linked rubber, the resulting cross-linked rubber can have excellent original state physical properties and high compression set resistance. In particular, the present inventors have examined properties of the acrylic rubber in order to satisfy a recent requirement for improved compression set resistance. The present inventors have found that control of the residual calcium content and the polymer pH to predetermined values or less is effective in reducing the compression set, and have completed the present invention based on such findings.

In addition, according to the findings of the present inventors, influences by the residual calcium content and the polymer pH are more remarkable at a relatively low cross-linking rate in cross-linking of the acrylic rubber compounded with the cross-linking agent. For this reason, the control of the residual calcium content and the polymer pH to the predetermined values or less is particularly effective at a relatively low cross-linking rate. In particular, for traditional cross-linked rubbers such as hoses and tubes, produced through extrusion molding, a relatively slow cross-linking system should be selected because of the nature of the method of producing the cross-linked rubbers. However, the selection of a relatively slow cross-linking system is more prone to lead to a problem such as compression set resistance inferior to that achieved by a fast cross-linking system. In contrast, according to the present invention, by controlling the residual calcium content in the acrylic rubber to 60 wt ppm or less and the polymer pH of the acrylic rubber to 7.0 or less, excellent original state physical properties and high compression set resistance can be demonstrated even if a relatively slow cross-linking system is selected.

Furthermore, the traditional cross-linked rubbers have another problem: If a relatively slow cross-linking system is selected and undergoes cross-linking by steam cross-linking, air bubbles are generated and are unintentionally contained in the resulting cross-linked rubber, reducing properties. In contrast, the acrylic rubber according to the present invention can prevent a reduction in compression set resistance and, in addition to it, can effectively prevent the generation of such air bubbles.

The acrylic rubber according to the present invention has a residual calcium content of 60 wt ppm or less, preferably 50 wt ppm or less, more preferably 40 wt ppm or less, still more preferably 30 wt ppm or less. The lower limit of the residual calcium content can be any numeric value. The lower limit is preferably 0.5 wt ppm or more. In other words, an acrylic rubber composition containing the acrylic rubber and residual calcium and having a residual calcium content of 60 wt ppm or less and a polymer pH of 7.0 or less is also included in an aspect of the present invention.

The residual calcium content can be determined as follows: Sulfuric acid and nitric acid are added to an acrylic rubber, and the acrylic rubber is wet decomposed by heating the mixture. The resulting product is then appropriately diluted to prepare a sample, and the content of calcium ion in the sample is measured by an internal standard calibration curve method using an inductively coupled plasma atomic emission spectrometer (ICP-AES). The residual calcium content in the acrylic rubber can be controlled within the range above by any method. Examples thereof include a method of avoiding use of compounding agents containing calcium as compounding agents used in production of acrylic rubber, such as a coagulant and a pH adjuster, and a method of controlling the calcium ion concentration in a washing liquid used for washing after coagulation, a method of adjusting the pH during washing after coagulation, and the like. These methods may be used alone or in combination. A preferred method is a method of avoiding use of compounding agents containing calcium as compounding agents from the viewpoint of production.

The acrylic rubber according to the present invention has a polymer pH of 7.0 or less, preferably 6.8 or less, more preferably 6.5 or less. Although the lower limit of the polymer pH can be any value, the lower limit is preferably 3.0 or more. The polymer pH in the present invention refers to the pH of a component contained in a dried rubber, and can be determined by the following method, for example. Specifically, 6 g of dried rubber is dissolved in 100 g of a solvent in which the dried rubber is soluble (such as tetrahydrofuran) to prepare a rubber solution. Then, 2.0 ml of distilled water is added to the resulting rubber solution, and is mixed by stirring to measure the pH of the resulting solution. The polymer pH can be controlled within the range above by any method. For the production of the acrylic rubber through emulsion polymerization, examples thereof include a method of controlling the pH of an uncoagulated acrylic rubber emulsion prepared through emulsion polymerization to preferably 6.8 or less, more preferably 6.5 or less, a method of using a coagulation water having a pH adjusted to preferably 6.8 or less, more preferably 6.5 or less in coagulation, a method of using a washing liquid having a pH adjusted to preferably 6.8 or less, more preferably 6.5 or less in washing after coagulation, and the like. These methods may be used alone or in combination. Among these methods, a method of controlling the pH of an uncoagulated acrylic rubber emulsion to preferably 6.8 or less, more preferably 6.5 or less is particularly suitable from the viewpoint of the productivity. The pH of the uncoagulated acrylic rubber emulsion can be adjusted, for example, by a method of controlling the pH during emulsion polymerization by adjusting the condition for emulsion polymerization, or a method of adding a pH adjuster to the polymer emulsion after emulsion polymerization.

### <Method for producing acrylic rubber>

The acrylic rubber according to the present invention can be produced by the following method, for example. Specifically, the method for producing an acrylic rubber comprises:
an emulsion polymerization step of emulsion polymerizing monomers for forming an acrylic rubber to prepare a polymer emulsion;
a coagulation step of adding a coagulant to the polymer emulsion to yield hydrous crumbs;
a washing step of washing the hydrous crumbs; and
a drying step of drying the washed hydrous crumbs.

### <Emulsion polymerization step>

The emulsion polymerization step is a step of emulsion polymerizing monomers for forming an acrylic rubber to prepare a polymer emulsion.

Emulsion polymerization in the emulsion polymerization step may be performed using a standard method. An emulsifier, a polymerization initiator, a polymerization terminator, and the like can be used according to the standard method.

Any emulsifier can be used without limitation. Examples thereof include nonionic emulsifiers, such as polyoxyethylene alkyl ethers such as polyoxyethylene dodecyl ether, polyoxyethylene alkylphenol ethers such as polyoxyethylene nonylphenyl ether, polyoxyethylene alkyl esters, polyoxyethylene sorbitan alkyl esters, polyoxyethylene polyoxypropylene glycol, and polyethylene glycol monostearate; anionic emulsifiers, such as salts of fatty acids such as myristic acid, palmitic acid, oleic acid, and linolenic acid, alkylbenzene sulfonates such as sodium dodecylbenzenesulfonate, higher alcohol sulfate salts such as sodium lauryl sulfate, higher phosphate salts such as sodium alkyl phosphates, and alkyl sulfosuccinates; cationic emulsifiers, such as alkyl trimethyl ammonium chlorides, dialkyl ammonium chlorides, and benzyl ammonium chloride; and the like. These emulsifiers can be used alone or in combination. Among these nonionic emulsifiers, preferred are polyoxyethylene polypropylene glycol, polyethylene glycol monostearate, polyoxyethylene alkyl ethers, and polyoxyethylene alkylphenol ethers. Among these anionic emulsifiers, preferred are higher phosphate salts and higher alcohol sulfate salts.

Among these emulsifiers, preferred are nonionic emulsifiers and anionic emulsifies. Use of a combination of these nonionic emulsifiers and anionic emulsifiers is also preferred. The total amount of the emulsifiers to be used is preferably 0.1 to 5 parts by weight, more preferably 0.5 to 4 parts by weight, still more preferably 1 to 3 parts by weight relative to 100 parts by weight of the monomers used in polymerization.

As a polymerization initiator, azo compounds such as azobisisobutyronitrile; organic peroxides such as diisopropylbenzene hydroperoxide, cumene hydroperoxide, paramenthane hydroperoxide, and benzoyl peroxide; inorganic peroxides such as sodium persulfate, potassium persulfate, hydrogen peroxide, and ammonium persulfate; and the like can be used. These polymerization initiators can be used alone or in combination. The amount of the polymerization initiator to be used is preferably 0.001 to 1.0 part by weight relative to 100 parts by weight of the monomers used in polymerization.

The organic peroxides and the inorganic peroxides as the polymerization initiator are preferably used as a redox polymerization initiator in combination with a reducing agent. Any reducing agent can be used in combination. Examples thereof include compounds containing reduced metal ions, such as ferrous sulfate, hexamethylenediaminetetraacetic acid ferric sodium salt, and cuprous naphthenate; ascorbic acid (salts) such as ascorbic acid, sodium ascorbate, and potassium ascorbate; erythorbic acid (salts) such as erythorbic acid, sodium erythorbate, and potassium erythorbate; saccharides; sulfinic acid salts such as sodium hydroxymethanesulfinate; sulfurous acid salts such as sodium sulfite, potassium sulfite, sodium hydrogen sulfite, aldehyde sodium hydrogen sulfite, and potassium hydrogen sulfite; pyrosulfurous acid salts such as sodium pyrosulfite, potassium pyrosulfite, sodium hydrogen pyrosulfite, and potassium hydrogen pyrosulfite; thiosulfuric acid salts such as sodium thiosulfate and potassium thiosulfate; phosphorus acid (salts) such as phosphorus acid, sodium phosphite, potassium phosphite, sodium hydrogen phosphite, and potassium hydrogen phosphite; pyrophosphorus acid (salts) such as pyrophosphorus acid, sodium pyrophosphite, potassium pyrophosphite, sodium hydrogen pyrophosphite, and potassium hydrogen pyrophosphite; and sodium formaldehyde sulfoxylate; and the like. These reducing agents can be used alone or in combination. The amount of the reducing agent to be used is preferably 0.0003 to 0.1 parts by weight relative to 100 parts by weight of the polymerization initiator.

Examples of the polymerization terminator include hydroxylamine, hydroxyamine sulfate, diethylhydroxyamine, hydroxyamine sulfonate and alkali metal salts thereof, sodium dimethyldithiocarbamate, hydroquinone, and the like. The polymerization terminator can be used in any amount. The amount thereof is preferably 0.1 to 2 parts by weight relative to 100 parts by weight of the monomers used in polymerization.

The amount of water to be used is preferably 80 to 500 parts by weight, more preferably 100 to 300 parts by weight relative to 100 parts by weight of the monomers used in polymerization.

In emulsion polymerization, polymerization additives, such as a molecular weight adjuster, a particle size adjuster, a chelating agent, an oxygen trapping agent, and the like can be used as needed.

Although emulsion polymerization may be performed by any of a batchwise method, a semi-batchwise method, and a continuous method, a semi-batchwise method is preferred. Specifically, the polymerization reaction may be performed while at least one of the monomers used in polymerization, the polymerization initiator, and the reducing agent is being continuously added dropwise to the polymerization reaction system from the start of the polymerization reaction to any point of time. For example, the polymerization reaction is performed while the monomers used in polymerization are being continuously added dropwise to a polymerization reaction system containing the polymerization initiator and the reducing agent from the start of the polymerization reaction to any point of time. Alternatively, the polymerization reaction may be performed while all the monomers used in polymerization, the polymerization initiator, and the reducing agent are being continuously added dropwise to the polymerization reaction system from the start of the polymerization reaction to any point of time. By performing the polymerization reaction while these substances are being continuously added dropwise, emulsion polymerization can be stably performed, improving the polymerization conversion ratio. The polymerization is performed in the temperature range of usually 0 to 70°C, preferably 5 to 50°C.

A pH adjuster may be added to the polymer emulsion prepared through the emulsion polymerization step to adjust the pH. Any pH adjuster can be used without limitation. A substantially calcium-free pH adjuster is preferred to control the residual calcium content in the resulting acrylic rubber to 60 wt ppm or less. The pH of the polymer emulsion prepared through the emulsion polymerization step is preferably 6.5 or less, more preferably 6.0 or less, still more preferably 5.5 or less from the viewpoint of control of the polymer pH of the resulting acrylic rubber to 7.0 or less.

If the polymerization reaction is performed while the monomers used in polymerization are being continuously added dropwise, the monomers used in polymerization are mixed with the emulsifier(s) and water into a monomer emulsion, and the monomer emulsion may be continuously added dropwise. The monomer emulsion can be prepared by any method. Examples thereof include a method of stirring the total amount of the monomers used in polymerization, the total amount of the emulsifiers, and water using a stirrer such as a homomixer and a disc turbine; and the like. The amount of water to be used in the monomer emulsion is preferably 10 to 70 parts by weight, more preferably 20 to 50 parts by weight relative to 100 parts by weight of the monomers used in polymerization.

If the polymerization reaction is performed while all the monomers used in polymerization, the polymerization initiator, and the reducing agent are being continuously added dropwise to the polymerization reaction system from the start of the polymerization reaction to any point of time, these substances may be separately added dropwise to the polymerization system using droppers, or at least the polymerization initiator and the reducing agent may be preliminarily mixed and prepared into an aqueous solution as needed, so that these agents may be added dropwise to the polymerization system from the same dropper. After the addition is completed, the reaction may be continued for any time to further improve the polymerization conversion ratio.

### <Coagulation step>

The coagulation step is a step of adding a coagulant to the polymer emulsion prepared through the emulsion polymerization step to yield hydrous crumbs.

Any coagulant can be used without limitation. Preferred is use of a substantially calcium-free coagulant to control the residual calcium content in the resulting acrylic rubber to 60 wt ppm or less. Examples of the coagulant include metal chlorides such as sodium chloride, potassium chloride, lithium chloride, magnesium chloride, zinc chloride, titanium chloride, manganese chloride, iron chloride, cobalt chloride, nickel chloride, aluminum chloride, and tin chloride; nitric acid salts such as sodium nitrate, potassium nitrate, lithium nitrate, magnesium nitrate, zinc nitrate, titanium nitrate, manganese nitrate, iron nitrate, cobalt nitrate, nickel nitrate, aluminum nitrate, and tin nitrate; sulfuric acid salts such as sodium sulfate, lithium sulfate, magnesium sulfate, calcium sulfate, zinc sulfate, titanium sulfate, manganese sulfate, iron sulfate, cobalt sulfate, nickel sulfate, aluminum sulfate, and tin sulfate; and the like. Among these, preferred are sodium chloride, magnesium sulfate, and sodium sulfate, and particularly preferred is magnesium sulfate. These coagulants may be used alone or in combination.

Although the coagulation temperature can be any temperature, it is preferably 50 to 100°C, more preferably 60 to 90°C.

### <Washing step>

The washing step is a step of washing the hydrous crumbs yielded in the coagulation step.

Any washing method can be used without limitation. Examples thereof include a method of washing the hydrous crumbs by using water as a washing liquid and mixing the hydrous crumbs with added water. This operation is preferably performed using water containing preferably 10 wt ppm or less, more preferably 1 wt ppm or less of calcium to control the residual calcium content in the resulting acrylic rubber to 60 wt ppm or less.

Any amount of water can be added to the hydrous crumbs during washing with water. To effectively reduce the amount of residual coagulant in the acrylic rubber finally yielded, water is added in an amount of preferably 50 to 9800 parts by weight, more preferably 300 to 1800 parts by weight relative to 100 parts by weight of solids (acrylic rubber component) contained in the hydrous crumbs.

The number of times of washing with water is not particularly limited, and the operation may be performed one time. To reduce the amount of residual coagulant in the acrylic rubber finally yielded, the washing operation is performed preferably 2 to 8 times. Although a larger number of times of washing with water is desirable to reduce the amount of residual coagulant in the acrylic rubber finally yielded, the number of times thereof is preferably within the range described above. Even if washing is performed beyond this range, its coagulant removal effect is small, and the number of steps is increased to significantly reduce the productivity.

To further reduce the polymer pH of the resulting acrylic rubber, acid washing using an acid as a washing liquid may be further performed after washing with water. Any acid, such as sulfuric acid, hydrochloric acid, and phosphoric acid, can be used in acid washing without limitation. In acid washing, the acid added to the hydrous crumbs is preferably in the form of an aqueous solution preferably having a pH of 6 or less, more preferably 4 or less, still more preferably 3 or less. Any acid washing method can be used. Examples thereof include a method of mixing the hydrous crumbs with an added aqueous solution of an acid.

Acid washing can be performed at any temperature. The temperature is preferably 5 to 60°C, more preferably 10 to 50°C. The mixing time is preferably 1 to 60 minutes, more preferably 2 to 30 minutes. The washing liquid used in acid washing can have any pH. The pH is preferably 6 or less, more preferably 4 or less, still more preferably 3 or less. The pH of the washing liquid for acid washing can be determined by measuring the pH of water contained in the hydrous crumbs after acid washing, for example.

After acid washing is performed, it is preferred that washing with water be further performed. The same conditions as those in washing with water can be used.

### <Drying step>

The drying step is a step of drying the hydrous crumbs washed in the washing step.

The drying step can be performed by any drying method. The hydrous crumbs can be dried using a dryer such as a screw extruder, a kneader dryer, an expander dryer, a hot air dryer, or a reduced pressure dryer. A drying method using a combination thereof may also be used. Furthermore, before drying of the hydrous crumbs in the drying step, the hydrous crumbs may be separated, as needed, using a sieve such as a rotary screen and a vibration screen; a centrifugal dehydrator; and the like.

For example, the drying step can be performed at any drying temperature. Although the drying temperature varies according to the dryer to be used in drying, the drying temperature when a hot air dryer is used, for example, is preferably 80 to 200°C, more preferably 100 to 170°C.

The production method above can provide the acrylic rubber according to the present invention as described above.

The acrylic rubber according to the present invention thus produced has a Mooney viscosity (ML1+4, 100°C) (polymer Mooney) of preferably 10 to 80, more preferably 20 to 70, still more preferably 25 to 60.

### <Acrylic rubber composition>

The acrylic rubber composition according to the present invention is prepared by compounding a cross-linking agent with the acrylic rubber according to the present invention described above.

Any cross-linking agent can be used without limitation. Conventional known cross-linking agents can be used: for example, polyvalent amine compounds such as diamine compounds and carbonates thereof; sulfur; sulfur donors; triazinethiol compounds; polyvalent epoxy compounds; organic ammonium carboxylate salts; organic peroxides; dithiocarbamic acid metal salts; polyvalent carboxylic acids; quaternary onium salts; imidazole compounds; isocyanuric acid compounds; organic peroxides; and the like. These cross-linking agents can be used alone or in combination. It is preferred that the cross-linking agent be appropriately selected according to the type of cross-linkable monomer unit.

Among these cross-linking agents, preferred cross-linking agents to be used are polyvalent amine compounds and carbonates thereof if the acrylic rubber according to the present invention includes an α,β-ethylenically unsaturated carboxylic acid monomer unit as a cross-linkable monomer unit.

Any polyvalent amine compounds and carbonates thereof can be used without limitation. Preferred are C₄ to C₃₀ polyvalent amine compounds and carbonates thereof. Examples of such polyvalent amine compounds and carbonates thereof include aliphatic polyvalent amine compounds and carbonates thereof, aromatic polyvalent amine compounds, and the like.

Any aliphatic polyvalent amine compounds and carbonates thereof can be used without limitation. Examples thereof include hexamethylenediamine, hexamethylenediamine carbamate, N,N'-dicinnamylidene-1,6-hexanediamine, and the like. Among these compounds, preferred is hexamethylenediamine carbamate.

Any aromatic polyvalent amine compound can be used without limitation. Examples thereof include 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, and the like. Among these compounds, preferred is 2,2'-bis[4-(4-aminophenoxy)phenyl]propane.

The content of the cross-linking agent in the acrylic rubber composition according to the present invention is preferably 0.05 to 10 parts by weight, more preferably 0.1 to 5 parts by weight, particularly preferably 0.2 to 4 parts by weight relative to 100 parts by weight of acrylic rubber. A content of the cross-linking agent within this range can provide a cross-linked rubber having sufficient rubber elasticity and high mechanical strength.

It is also preferred that the acrylic rubber composition according to the present invention further comprise a cross-linking accelerator. Any cross-linking accelerator can be used without limitation. If the acrylic rubber according to the present invention has a carboxyl group as a cross-linkable group and the cross-linking agent is a polyvalent amine compound or a carbonate thereof, guanidine compounds, diazabicycloalkene compounds, imidazole compounds, quaternary onium salts, tertiary phosphine compounds, aliphatic monovalent primary amine compounds, aliphatic monovalent secondary amine compounds, aliphatic monovalent tertiary amine compounds, and the like can be used. Among these compounds, preferred are guanidine compounds, diazabicycloalkene compounds, aliphatic monovalent primary amine compounds, and aliphatic monovalent secondary amine compounds. More preferred are guanidine compounds, diazabicycloalkene compounds, and aliphatic monovalent primary amine compounds. Particularly preferred are diazabicycloalkene compounds and aliphatic monovalent primary amine compounds. These basic cross-linking accelerators can be used alone or in combination.

Specific examples of the guanidine compounds include 1,3-di-o-tolylguanidine, 1,3-diphenylguanidine, and the like. Specific examples of the diazabicycloalkene compounds include 1,8-diazabicyclo[5.4.0]undec-7-ene, 1,5-diazabicyclo[4.3.0]-5-nonene, and the like. Specific examples of the imidazole compounds include 2-methylimidazole, 2-phenylimidazole, and the like. Specific examples of the quaternary onium salts include tetra-n-butyl ammonium bromide, octadecyl-tri-n-butyl ammonium bromide, and the like. Specific examples of the tertiary phosphine compounds include triphenylphosphine, tri-p-tolylphosphine, and the like.

The aliphatic monovalent primary amine compounds are compounds where one hydrogen atom of ammonia is substituted with an aliphatic hydrocarbon group. The aliphatic hydrocarbon group which substitutes the hydrogen atom is preferably a C₁ to C₃₀ aliphatic hydrocarbon group. Specific examples of the aliphatic monovalent primary amine compounds include n-tetradecylamine, n-hexadecylamine, n-octadecylamine (stearylamine), and the like.

The aliphatic monovalent secondary amine compounds are compounds where two hydrogen atoms of ammonia are substituted with an aliphatic hydrocarbon group. The aliphatic hydrocarbon groups which substitute the hydrogen atoms are preferably C₁ to C₃₀ aliphatic hydrocarbon groups. Specific examples of the aliphatic monovalent secondary amine compounds include dimethylamine, diethylamine, dipropylamine, diallylamine, diisopropylamine, di-n-butylamine, di-t-butylamine, di-sec-butylamine, dihexylamine, diheptylamine, dioctylamine, dinonylamine, didecylamine, diundecylamine, didodecylamine, ditridecylamine, ditetradecylamine, dipentadecylamine, dicetylamine, di-2-ethylhexylamine, dioctadecylamine, and the like.

The aliphatic monovalent tertiary amine compounds are compounds where all the three hydrogen atoms of ammonia are substituted with an aliphatic hydrocarbon group. The aliphatic hydrocarbon groups which substitute the hydrogen atoms are preferably C₁ to C₃₀ aliphatic hydrocarbon groups. Specific examples of the aliphatic monovalent tertiary amine compounds include trimethylamine, triethylamine, tripropylamine, triallylamine, triisopropylamine, tri-n-butylamine, tri-t-butylamine, tri-sec-butylamine, trihexylamine, triheptylamine, trioctylamine, trinonylamine, tridecylamine, triundecylamine, tridodecylamine, and the like.

The content of the cross-linking accelerator in the acrylic rubber composition according to the present invention is preferably 0.1 to 10 parts by weight, more preferably 0.5 to 7.5 parts by weight, particularly preferably 1 to 5 parts by weight relative to 100 parts by weight of the acrylic rubber. A content of the cross-linking accelerator within this range can result in a cross-linked rubber having further improved tensile strength and compression set resistance.

The acrylic rubber composition according to the present invention comprises the acrylic rubber according to the present invention described above. The acrylic rubber according to the present invention has a residual calcium content controlled to 60 wt ppm or less and a polymer pH controlled to 7.0 or less. Thus, as described above, excellent original state physical properties and high compression set resistance can be achieved even if a relatively slow cross-linking system is selected.

For this reason, a relatively slow cross-linking system is also preferably selected from the viewpoint of applications of cross-linked rubber produced by extrusion molding, such as hoses and tubes. Specifically, a cross-linking system having a Mooney scorch time t35 of 15 minutes or more, preferably 20 minutes or more, more preferably 25 minutes or more can be selected, the Mooney scorch time being measured at a temperature of 125°C according to JIS K6300. If such a cross-linking system is selected, the resulting product can be suitably used in the applications described above. The Mooney scorch time t35 can be controlled to this range by any method. Examples thereof include a method of appropriately selecting a desired cross-linking agent and/or cross-linking accelerator from the cross-linking agents and cross-linking accelerators listed above, a method of using a desired cross-linking agent and/or cross-linking accelerator in combination with a cross-linking retarder, and the like.

Besides the ingredients described above, the acrylic rubber composition according to the present invention can contain a compounding agent usually used in the rubber processing field. Examples of such a compounding agent include reinforcing fillers such as silica and carbon black; non-reinforcing fillers such as calcium carbonate and clay; antioxidants; light stabilizers; scorch preventing agents; plasticizers; processing aids; tackifiers; lubricants; greases; flame retardants; antifungal agents; antistatic agents; colorants; and the like. These compounding agents can be compounded in any amount in the range not impairing the object and effects of the present invention, and can be appropriately compounded in amounts according to the purpose of compounding.

Furthermore, the acrylic rubber composition according to the present invention may further comprise a rubber other than the acrylic rubber according to the present invention, an elastomer, a resin, and the like in the range not impairing the effect of the present invention. For example, the followings can be compounded: acrylic rubber other than the acrylic rubber according to the present invention, rubber other than acrylic rubber such as natural rubber, polybutadiene rubber, polyisoprene rubber, styrene-butadiene rubber, acrylonitrile-butadiene rubber, silicon rubber, and fluororubber; elastomers such as olefin elastomers, styrene elastomers, vinyl chloride elastomers, polyester elastomers, polyamide elastomers, polyurethane elastomers, and polysiloxane elastomers; resins such as polyolefin resins, polystyrene resins, polyacrylic resins, polyphenylene ether resins, polyester resins, polycarbonate resins, polyamide resins, vinyl chloride resins, and fluorinated resins; and the like. The total compounding amount of the rubber other than the acrylic rubber according to the present invention, the elastomer, and the resin is preferably 50 parts by weight or less, more preferably 10 parts by weight or less, still more preferably 1 part by weight or less relative to 100 parts by weight of the acrylic rubber.

The acrylic rubber composition according to the present invention is prepared by compounding the cross-linking agent and a variety of compounding agents used as needed with the acrylic rubber, mixing and kneading these ingredients with a Banbury mixer or a kneader, and further kneading the ingredients using a kneading roll.

Although the ingredients can be compounded in any order, in a preferred order, ingredients which barely react or decompose by heat are sufficiently mixed, and then those which readily react or decompose by heat, such as a cross-linking agent, are mixed in a short time at a temperature at which the reaction and the decomposition thereof are avoided.

### <Cross-linked rubber>

The cross-linked rubber according to the present invention is prepared by cross-linking the acrylic rubber composition according to the present invention described above.

The cross-linked rubber according to the present invention can be prepared by forming the acrylic rubber composition according to the present invention by a forming method such as extrusion molding, injection molding, transfer molding, or compression molding, and cross-linking the formed product.

Extrusion molding can be performed according to a standard procedure in the rubber processing field. That is, the acrylic rubber composition according to the present invention is fed into a feed port of an extruder. While being transported to the head section by a screw, the acrylic rubber composition is softened by heat from the barrel, and is passed through a die of a predetermined shape disposed in the head section to form an elongate extrusion molded article having a desired cross-sectional shape (such as a plate, a bar, a pipe, a hose, or an irregular-shaped article). The barrel temperature is preferably 50 to 120°C, more preferably 60 to 100°C. The head temperature is preferably 60 to 130°C, more preferably 60 to 110°C, and the die temperature is preferably 70 to 130°C, more preferably 80 to 100°C. The extrusion molded article thus prepared is cross-linked (primarily cross-linked) by heating to 130°C to 220°C, more preferably 140°C to 200°C in an oven which uses steam, electricity, hot air, or the like as a heat source. A cross-linked rubber can be thereby prepared.

In particular, the acrylic rubber according to the present invention has a residual calcium content controlled to 60 wt ppm or less and a polymer pH controlled to 7.0 or less. Thus, as described above, excellent original state physical properties and high compression set resistance can be achieved even if a relatively slow cross-linking system is selected. Accordingly, even if extrusion molding, which takes a relatively long time to mold, is performed, the resulting cross-linked rubber can have excellent original state physical properties and high compression set resistance. In addition, even if cross-linked by steam cross-linking after extrusion molding, the acrylic rubber according to the present invention having a residual calcium content controlled to 60 wt ppm or less and a polymer pH controlled to 7.0 or less also can suitably prevent a failure that air bubbles are generated and contained in the resulting cross-linked rubber.

Furthermore, the cross-linked product primarily cross-linked may be cross-linked (secondarily cross-linked), as needed, by heating to preferably 130°C to 220°C, more preferably 140°C to 200°C for 1 to 48 hours in an oven which uses steam, electricity, hot air, or the like as a heat source.

The cross-linked rubber according to the present invention has excellent original state physical properties and high compression set resistance. For this reason, utilizing such properties, the cross-linked rubber according to the present invention can be suitably used as sealing materials such as O-rings, packings, oil seals, and bearing seals; gaskets; buffer materials, vibration insulators; electric wire coating materials; industrial belts; tubes and hoses; sheets; and the like, for example, in broad fields of transportation machines such as automobiles, general machinery, and electrical apparatuses, and can be particularly suitably used, especially as tubes and hoses.

### EXAMPLES

The present invention will now be more specifically described by way of Examples and Comparative Examples. In Examples, "parts" are expressed in terms of weight, unless otherwise specified.

A variety of properties were evaluated according to the following methods.

### [Residual calcium content]

The residual calcium content was determined as follows: Sulfuric acid and nitric acid were added to an acrylic rubber, and the acrylic rubber was wet decomposed by heating the mixture. The resulting product was appropriately diluted to prepare a sample, and the content of calcium ions in the sample was measured by an internal standard calibration curve method using an ICP-AES apparatus (SPS-5000: made by Seiko Instruments Inc.).

### [Polymer pH]

The polymer pH of the acrylic rubber was measured by the following procedure. First, the acrylic rubber was formed into a sheet using a roll. The sheet-shaped acrylic rubber was finely cut, and 6 g (± 0.05 g) of the cut acrylic rubber was weighed. In the next step, the 6 g of acrylic rubber was placed into a conical flask containing 100 g of tetrahydrofuran, and was dissolved in tetrahydrofuran by stirring. Subsequently, 2.0 ml (± 0.1 ml) of distilled water was measured with a syringe, and was added dropwise into the conical flask in portions while the solution was being stirred. After addition of distilled water, stirring was continued until aggregates generated as a result of addition of distilled water were completely dissolved. It was checked that the aggregates were completely dissolved, and a pH electrode was placed into the conical flask to measure the pH. The pH value after one minute from the start of the measurement was defined as a polymer pH.

### [Mooney scorch times t5 and t35]

The acrylic rubber composition was measured for the Mooney scorch time t5 (time taken from the start of the measurement to a 5 M increase of the Mooney viscosity from the minimum value Vm of the Mooney viscosity) and the Mooney scorch time t35 (time taken from the start of the measurement to a 35 M increase of the Mooney viscosity from the minimum value Vm of the Mooney viscosity) under a measurement condition at 125°C according to JIS K6300. Longer Mooney scorch times t5 and t35 indicate a lower cross-linking rate, and it can be determined that sufficient time can be ensured for molding before cross-linking.

### [Original state physical properties (tensile strength, elongation, and 100% tensile stress)]

An acrylic rubber composition was placed into a metal mold having a length of 15 cm, a width of 15 cm, and a depth of 0.2 cm. The acrylic rubber composition was then subjected to preparative molding by pressing at a temperature of 80°C for 5 minutes, followed by pressing at a temperature of 20°C for 30 minutes to prepare a sheet-shaped preparatively molded body. The resulting sheet-shaped preparatively molded body was steam cross-linked at 160°C for 40 minutes by using a steam can and directly introducing steam of 0.5 MPa thereinto. The resulting steam cross-linked product was secondarily cross-linked by further heating at 170°C for 4 hours in a gear oven. A sheet-shaped cross-linked rubber was thereby prepared. The resulting cross-linked rubber was punched out with a #3 dumbbell into a test piece. The test piece was measured for the tensile strength, the elongation, and the 100% tensile stress according to JIS K6251.

### [Air bubbles generated by steam cross-linking]

The surface of the cross-linked rubber used in the evaluation of the original state physical properties was visually observed, and the presence/absence of air bubbles generated by steam cross-linking was evaluated according to the following criteria:
A: No air bubbles are found.
B: Air bubbles having a size of 1 to 3 mm are found.
F: Air bubbles having a size more than 3 mm are found.

### [Compression set ratio]

An acrylic rubber composition was pressed at a temperature of 160°C for 40 minutes using a metal mold to be primarily cross-linked into a cylindrical primarily cross-linked product having a diameter of 29 mm and a height of 12.7 mm. The resulting primarily cross-linked product was then secondarily cross-linked by further heating at 170°C for 4 hours in a gear oven. A cylindrical cross-linked rubber was thereby prepared. According to JIS K6262, the resulting cross-linked rubber was 25% compressed, and was left to stand under an environment at 175°C for 72 hours. The compression set ratio of the cross-linked rubber was measured. A smaller ratio indicates higher compression set resistance.

### [Production Example 1]

200 parts of pure water, 69.8 parts of ethyl acrylate, 29.0 parts of n-butyl (meth)acrylate, 1.2 parts of mono-n-butyl fumarate, and 2.4 parts of sodium lauryl sulfate (trade name "Emal 2FG", made by Kao Corporation) as a surfactant were placed into a polymerization reactor provided with a thermometer, a stirrer, a nitrogen inlet pipe, and a depressurizer. Subsequently, degassing by reducing pressure and pursing with nitrogen were repeated to sufficiently remove oxygen, and 0.00014 parts of sodium formaldehyde sulfoxylate and 0.25 parts of paramenthane hydroperoxide were added to initiate the emulsion polymerization reaction under normal pressure and normal temperature. The reaction was continued until the polymerization conversion ratio reached 95%. A polymer emulsion was thereby prepared. The resulting polymer emulsion had a pH of 4.8 and a solids content of 32 wt%.

The polymer emulsion was then transferred into a coagulation tank, and 200 parts of deionized water (calcium ion concentration: 0 wt ppm) was added relative to 100 parts (32 parts in terms of polymer) of the polymer emulsion. The mixed solution was heated to 85°C. While the mixed solution was being stirred at a temperature of 85°C, 3.2 parts (10 parts relative to 100 parts of the polymer contained in the polymer emulsion) of magnesium sulfate as a coagulant was continuously added to solidify the polymer. Hydrous crumbs of the polymer were thereby yielded.

In the next step, 300 parts of deionized water (calcium ion concentration: 0 wt ppm) was added relative to 100 parts of the solids content of the resulting hydrous crumbs, followed by stirring in the coagulation tank at 15°C for 5 minutes. Water was then discharged from the coagulation tank to complete washing of the hydrous crumbs with water. In the present Production Example, such washing with water was repeated two times. The hydrous crumbs washed with water were dried at 110°C for one hour in a hot air dryer to yield solid Acrylic rubber (A1).

The composition of Acrylic rubber (A1) consisted of 69.8 wt% of ethyl acrylate unit, 29 wt% of n-butyl (meth)acrylate unit, and 1.2 wt% of mono-n-butyl fumarate unit. Acrylic rubber (A1) had a residual calcium content of 6.5 wt ppm and a polymer pH of 6.1.

### [Production Example 2]

Solid Acrylic rubber (A2) was prepared in the same manner as in Production Example 1 except that the number of operations of washing the hydrous crumbs with water after coagulation was changed from two times to three times. The composition of Acrylic rubber (A2) consisted of 69.8 wt% of ethyl acrylate unit, 29 wt% of n-butyl (meth)acrylate unit, and 1.2 wt% of mono-n-butyl fumarate unit. Acrylic rubber (A2) had a residual calcium content of 2.3 wt ppm and a polymer pH of 6.0.

### [Production Example 3]

Solid Acrylic rubber (A3) was prepared in the same manner as in Production Example 1 except that in washing with water, the hydrous crumbs after coagulation was washed with tap water (calcium ion concentration: 17 wt ppm) instead of deionized water. The composition of Acrylic rubber (A3) consisted of 69.8 wt% of ethyl acrylate unit, 29 wt% of n-butyl (meth)acrylate unit, and 1.2 wt% of mono-n-butyl fumarate unit. Acrylic rubber (A3) had a residual calcium content of 52.2 wt ppm and a polymer pH of 5.7.

### [Production Example 4]

Solid Acrylic rubber (A4) was prepared in the same manner as in Production Example 1 except that in addition of 3.2 parts (10 parts relative to 100 parts of the polymer contained in the polymer emulsion) of magnesium sulfate, 0.96 parts (3 parts relative to 100 parts of the polymer contained in the polymer emulsion) of calcium chloride was used as a coagulant in coagulation of the polymer emulsion. The composition of Acrylic rubber (A4) consisted of 69.8 wt% of ethyl acrylate unit, 29 wt% of n-butyl (meth)acrylate unit, and 1.2 wt% of mono-n-butyl fumarate unit. Acrylic rubber (A4) had a residual calcium content of 480 wt ppm and a polymer pH of 6.8.

### [Production Example 5]

A polymer emulsion was prepared by performing emulsion polymerization in the same manner as in Production Example 1, and a sodium hydroxide aqueous solution as a pH adjuster was added thereto to adjust the pH of the polymer emulsion to 8.9. The polymer emulsion having a pH adjusted to 8.9 was subjected to coagulation, washing with water, and drying in the same manner as in Production Examples 1 to yield solid Acrylic rubber (A5). The composition of Acrylic rubber (A5) consisted of 69.8 wt% of ethyl acrylate unit, 29 wt% of n-butyl (meth)acrylate unit, and 1.2 wt% of mono-n-butyl fumarate unit. Acrylic rubber (A5) had a residual calcium content of 7.5 wt ppm and a polymer pH of 7.3.

### [Production Example 6]

A polymer emulsion was prepared by performing emulsion polymerization in the same manner as in Production Example 1, and a calcium hydroxide aqueous solution as a pH adjuster was added thereto to adjust the pH of the polymer emulsion to 8.4. The polymer emulsion having a pH adjusted to 8.4 was subjected to coagulation, washing with water, and drying in the same manner as in Production Examples 1 to yield solid Acrylic rubber (A6). The composition of Acrylic rubber (A6) consisted of 69.8 wt% of ethyl acrylate unit, 29 wt% of n-butyl (meth)acrylate unit, and 1.2 wt% of mono-n-butyl fumarate unit. Acrylic rubber (A6) had a residual calcium content of 185 wt ppm and a polymer pH of 7.6.

### [Production Example 7]

A polymer emulsion was prepared by performing emulsion polymerization in the same manner as in Production Example 1, and a sodium hydroxide aqueous solution as a pH adjuster was added thereto to adjust the pH of the polymer emulsion to 6.8. The polymer emulsion having a pH adjusted to 6.8 was subjected to coagulation, washing with water, and drying in the same manner as in Production Example 1 except that in washing with water, the hydrous crumbs after coagulation was washed with tap water (calcium ion concentration: 17 wt ppm) instead of deionized water. Solid Acrylic rubber (A7) was thereby yielded. The composition of Acrylic rubber (A7) consisted of 69.8 wt% of ethyl acrylate unit, 29 wt% of n-butyl (meth)acrylate unit, and 1.2 wt% of mono-n-butyl fumarate unit. Acrylic rubber (A7) had a residual calcium content of 69.2 wt ppm and a polymer pH of 6.6.

### [Example 1]

60 parts of FEF carbon black (trade name "SEAST SO", made by Tokai Carbon Co., Ltd.), 2 parts of stearic acid, 1 part of ester wax (trade name "GLECK G-8205", made by DIC Corporation), and 2 parts of 4,4'-bis(α,α-dimethylbenzyl)diphenylamine (trade name "NOCRAC CD", made by Ouchi Shinko Chemical Industrial Co., Ltd.) were added to 100 parts of Acrylic rubber (A1) prepared in Production Example 1, and were mixed at 50°C for 5 minutes using a Banbury mixer. In the next step, the mixture was transferred to a roll at 50°C, and 0.5 parts of stearylamine (trade name "FARMIN 80", made by Kao Corporation, cross-linking accelerator), 1 part of 2,2'-bis[4-(4-aminophenoxy)phenyl]propane (made by Wakayama Seika Kogyo Co., Ltd., cross-linking agent), and 2 parts of 1,8-diazabicyclo[5.4.0]undec-7-ene (trade name "RHENOGRAN XLA-60", made by Lanxess AG, cross-linking accelerator) were compounded to prepare an acrylic rubber composition.

The resulting acrylic rubber composition was measured and evaluated for the Mooney scorch times t5 and t35, the original state physical properties (tensile strength, elongation, and 100% tensile stress), generation of air bubbles by steam cross-linking, and compression set according to the methods described above. The results are shown in Table 1.

### [Examples 2 and 3]

Acrylic rubber compositions were prepared in the same manner as in Example 1 except that instead of Acrylic rubber (A1) prepared in Production Example 1, Acrylic rubbers (A2) and (A3) prepared in Production Examples 2 and 3 were used, respectively. The acrylic rubber compositions were measured and evaluated in the same manner as above. The results are shown in Table 1.

### [Comparative Examples 1 to 4]

Acrylic rubber compositions were prepared in the same manner as in Example 1 except that instead of Acrylic rubber (A1) prepared in Production Example 1, Acrylic rubbers (A4) to (A7) were used, respectively. The acrylic rubber compositions were measured and evaluated in the same manner as above. The results are shown in Table 1.

### [Table 1]

**Table 1**

| | | | Example | | | Comparative Example | | | |
|---|---|---|---|---|---|---|---|---|---|
| | | | 1 | 2 | 3 | 1 | 2 | 3 | 4 |
| Condition for production of acrylic robber | pH of polymer emulsion | | 4.8 | 4.8 | 4.8 | 4.8 | 8.9 | 8.4 | 6.8 |
| | pH adjuster used | | Nonuse | Nonuse | Nonuse | Nonuse | NaOH | Ca(OH)₂ | NaOH |
| | Coagulant used | | MgSO₄ | MgSO₄ | MgSO₄ | MgSO₄ CaCl₂ | MgSO₄ | MgSO₄ | MgSO₄ |
| | Washing liquid used | | Deionized water | Deionized water | Tap water | Deionized water | Deionized water | Deionized water | Tap water |
| | Ca ion concentration in washing liquid used | (wt ppm) | 0 | 0 | 17 | 0 | 0 | 0 | 17 |
| | The number of times of washing with water | (times) | 2 | 3 | 2 | 2 | 2 | 2 | 2 |
| Results of measurement of acrylic rubber | Residual calcium content | (wt ppm) | 6.5 | 2.3 | 52.2 | 480 | 7.5 | 185 | 69.2 |
| | Polymer pH | | 6.1 | 6.0 | 5.7 | 6.8 | 7.3 | 7.6 | 6.6 |
| Formulation | Acrylic rubber | (parts) | 100 | 100 | 100 | 100 | 100 | 100 | 100 |
| | EEF carbon black | (parts) | 60 | 60 | 60 | 60 | 60 | 60 | 60 |
| | Stearic acid | (parts) | 2 | 2 | 2 | 2 | 2 | 2 | 2 |
| | Ester wax | (parts) | 1 | 1 | 1 | 1 | 1 | 1 | 1 |
| | 4,4'-Bis(α,α,-dimethylbenzyl)diphenylamine | (parts) | 2 | 2 | 2 | 2 | 2 | 2 | 2 |
| | Stearylamine | (parts) | 0.5 | 0.5 | 0.5 | 0.5 | 0.5 | 0.5 | 0.5 |
| | 2,2'-Bis[4-(4-aminopnenoxy) phenyl]propane | (parts) | 1 | 1 | 1 | 1 | 1 | 1 | 1 |
| | 1,8-Diazabicyclo[5.4.0]undec-7-ene | (parts) | 2 | 2 | 2 | 2 | 2 | 2 | 2 |
| Properties of acrylic rubber composition | Mooney scorch time t5 | (min) | >30 | >30 | >30 | >30 | >30 | >30 | >30 |
| | Mooney scorch time t35 | (min) | >30 | >30 | >30 | >30 | >30 | >30 | >30 |
| Evaluation of cross-linked rubber | Tensile strength | (MPa) | 9.7 | 9.8 | 10.1 | 9.9 | 10.0 | measurement impossible due to remarkable air bubbles | 9.9 |
| | Elongation | (%) | 290 | 280 | 290 | 290 | 290 | | 290 |
| | 100% tensile stress | (MPa) | 3.3 | 3.4 | 3.3 | 3.2 | 3.1 | | 3.2 |
| | Air bubbles generated by steam cross-linking | | A | A | A | B | B | F | B |
| | Compression set | (%) | 30 | 29 | 31 | 35 | 35 | 41 | 34 |

As shown in Table 1, the cross-linked rubers comprising the acrylic rubbers having a residual calcium content of 60wt ppm or less and a polymer pH of 7.0 or less demonstrated excellent original state physical properties and high compression set resistance even if the cross-linking agents having a relatively low cross-linking rate, that is, Mooney scorch times t5 and t35 of more than 30 minutes were used. Furthermore, air bubbles generated when steam cross-linking was performed were effectively prevented (Examples 1 to 3).

In contrast, the cross-linked rubbers comprising the acrylic rubbers having a residual calcium content of more than 60 wt ppm or a polymer pH of more than 7.0 had inferior compression set resistance. In addition, air bubbles of about 1 to 3 mm were generated when steam cross-linking was performed (Comparative Examples 1, 2, and 4).

Furthermore, the cross-linked rubber comprising the acrylic rubber having a residual calcium content of more than 60 wt ppm and a polymer pH of more than 7.0 had inferior compression set resistance. In addition, air bubbles were remarkably generated when steam cross-linking was performed, precluding the evaluation of the original state physical properties (tensile strength, elongation, and 100% tensile stress) (Comparative Example 3).

## Claims

1. An acrylic rubber having a residual calcium content of 60 wt ppm or less and a polymer pH of 7.0 or less.

2. The acrylic rubber according to claim 1, wherein the acrylic rubber has a carboxyl group.

3. The acrylic rubber according to claim 1 or 2, wherein the acrylic rubber includes an α,β-ethylenically unsaturated carboxylic acid monomer unit.

4. The acrylic rubber according to any one of claims 1 to 3, wherein the content of the α,β-ethylenically unsaturated carboxylic acid monomer unit is 0.1 to 10 wt% of the total monomer units.

5. The acrylic rubber according to any one of claims 1 to 4, wherein the content of a (meth)acrylic acid ester monomer unit is 50 to 99.9 wt% of the total monomer units.

6. An acrylic rubber composition comprising the acrylic rubber according to any one of claims 1 to 5, and a cross-linking agent.

7. The acrylic rubber composition according to claim 6, wherein the cross-linking agent is a polyvalent amine compound or a carbonate of a polyvalent amine compound.

8. The acrylic rubber composition according to claim 6 or 7, further comprising a cross-linking accelerator, wherein the cross-linking accelerator is a diazabicycloalkene compound or an aliphatic monovalent primary amine compound.

9. The acrylic rubber composition according to any one of claims 6 to 8, wherein the Mooney scorch time t35 measured at a temperature of 125°C according to JIS K6300 is 15 minutes or more.

10. A cross-linked rubber prepared through cross-linking of the acrylic rubber composition according to any one of claims 6 to 9.
